# EUROPÄISCHE PATENTSCHRIFT

(11) **EP 0 707 140 B1**
(45) Veröffentlichungstag und Bekanntmachung des Hinweises auf die Patenterteilung: **02.06.1999**
(21) Anmeldenummer: 95113594.6
(22) Anmeldetag: 30.08.1995
(51) Int. Cl.: F01P 5/10, B60T 1/08

(54) **Antriebseinheit mit einem Motor und einem Retarder**
Drive unit with an engine and a retarder
Unité d'entraînement à moteur et ralentisseur hydraulique

(30) Priorität: 12.10.1994 DE 4436344
(43) Veröffentlichungstag der Anmeldung: 17.04.1996
(73) Patentinhaber: Voith Turbo GmbH & Co. KG, 89522 Heidenheim (DE)
(72) Erfinder: Vogelsang, Klaus, D-74564 Crailsheim (DE); Friedrich, Jürgen, D-74564 Crailsheim (DE); Gebhardt, Hans, D-90759 Langenzenn (DE); Möller, Heribert, D-91623 Sachsen (DE)
(74) Vertreter: Weitzel, Wolfgang, Dr.-Ing. Patentanwalt

(56) Entgegenhaltungen:
- DE-A- 1 805 329
- DE-A- 3 545 657
- DE-C- 3 241 835
- DE-C- 4 415 031
- GB-A- 749 023

## Beschreibung

Die Erfindung betrifft eine Antriebseinheit mit einem Motor und einem Retarder gemäß dem Oberbegriff von Anspruch 1. Eine solche Antriebseinheit ist aus DE 37 13 580 C1 bekanntgeworden (Dokument 1).

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

DE-C-32 41 835 beschreibt eine hydrodynamische Einheit, die für ein Kraftfahrzeug vorgesehen ist und die derart aufgebaut ist, daß zum Fördern des Kühlmittels ein Pumpenrad vorgesehen ist, das koaxial zum Rotorschaufelrad des Retarders angeordnet ist.

Der Erfindung liegt die Aufgabe zugrunde, eine Antriebseinheit gemäß dem Oberbegriff derart zu gestalten, daß der Raumbedarf für die Aggregate, die die Funktionen "Pumpen" und "Bremsen" beanspruchen, so gering wie möglich ist, daß aber gleichzeitig die beiden genannten Funktionen optimal ausgeführt werden.

Diese Aufgabe wird durch die kennzeichnenden Merkmale von Anspruch 1 gelöst.

Die Erfindung ist anhand von Zeichnungen näher erläutert.

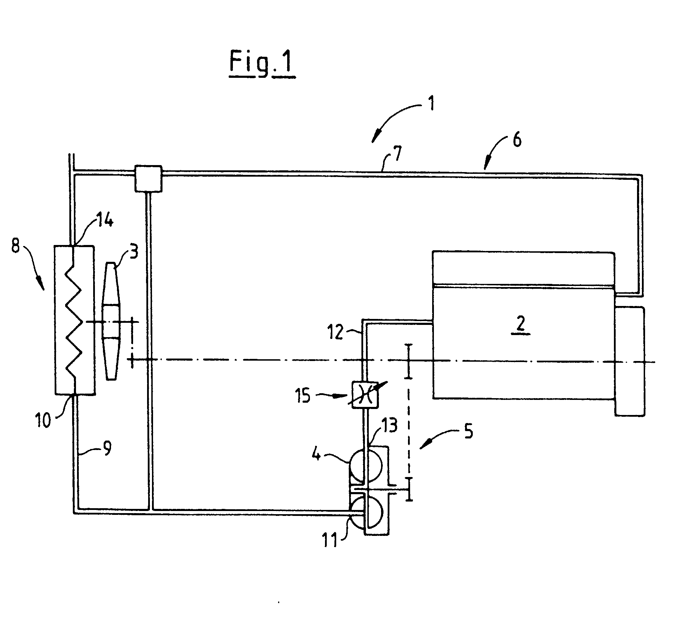

Die Figur 1 verdeutlicht ganz allgemein eine erfindungsgemäße Anordnung eines Retarders vor dem Getriebe. Eine Antriebseinheit 1 umfaßt einen Motor 2, ein, hier im einzelnen nicht dargestelltes Getriebe und einen hydrodynamischen Retarder 4. Der Retarder 4 befindet sich mit dem Motor 2, insbesondere der Kurbelwelle, in ständiger Triebverbindung. Im dargestellten Fall steht der Retarder über ein Vorgelege 5 in ständiger Drehverbindung. Dem Retarder 4 und dem Motor 2 ist ein gemeinsamer Kühlmittel kreislauf 6 zugeordnet. Das Kühlmittel 7 des Kühlmittel kreislaufes 6 fungiert zugleich als Arbeitsmittel des Retarders 4. Der Retarder ist für eine ständige Vollfüllung mit Arbeitsmittel ausgelegt. Aufgrund der Anordnung des Retarders 4 in Kraftflußrichtung vor dem Getriebe bleibt der Retarder in allen Betriebszuständen mit dem Motor gekoppelt, weshalb er auch als Pumpe zur Umwälzung für das Kühlmittel 7 ausnutzbar ist und keine leistungsverzehrende und wärmebelastende Leerlaufventilationsleistung im Retarder anfällt. Im Kühlmittelkreislauf 6 ist ein Kühler 8 mit einem Ventilator 3 vorgesehen. Der Ventilator 3 kann vom Motor 2 oder aber auch vom Retarder 4 angetrieben werden. Eine Leitung 9 führt dabei vom Austritt 10 des Kühlers 8 zum Flüssigkeitseintritt 11 in den Retarder 4, während eine Leitung 12 vom Flüssigkeitsaustritt 13 aus dem Retarder zum Flüssigkeitseintritt 14 in den Kühler 8 über den Motor 2 verläuft. In der Leitung 12 ist ein Ventil 15 vorgesehen, das es ermöglicht, den Leitungsquerschnitt der Leitung 12 stufenlos von 7 - 0,5 gegenüber der Leitung 9 zu verändern. Im Traktionsbetrieb, d.h. bei nichtbetätigtem Retarder, arbeitet dieser als Umwälzpumpe für das Kühlmittel 7 im Kühlmittelkreislauf 6. Der Querschnitt der Leitung 9 ist in diesem Fall vorzugsweise gleich dem Querschnitt der Leitung 12, d.h., daß das Ventil 15 im Nicht-Bremsbetrieb einen großen freien Durchlaßquerschnitt aufweist, bei dem das geförderte Kühlmittel 7 unter geringem Gegendruck durch den Kühlmittelkreislauf 6 der Antriebseinheit 1 gefördert wird.

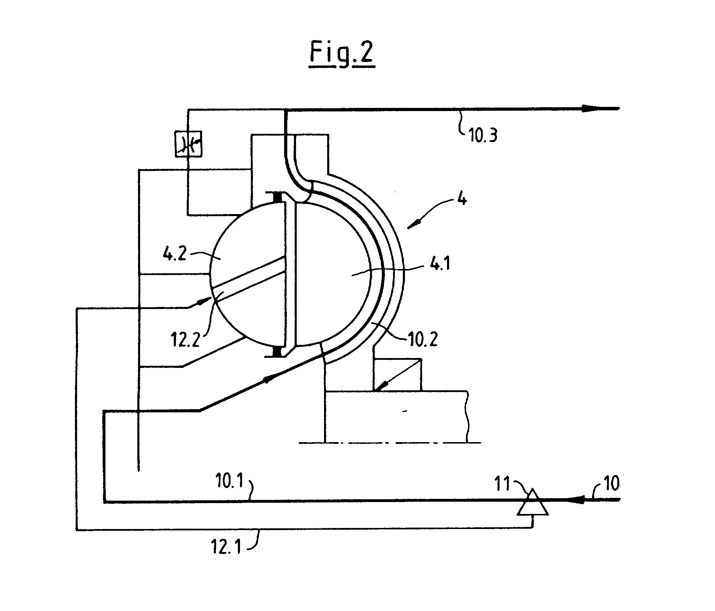

Figur 2 zeigt in einer ebenfalls schematischen Darstellung den Retarder 4 mit dessen Umfeld, insbesondere mit den zugehörenden Leitungen. Man erkennt im einzelnen ferner das Rotorschaufelrad 4.1 sowie das Statorschaufelrad 4.2. Eine Kühlmittelleitung 10 kommt vom Kühler 5. Man erkennt ein erstes Zweiwegeventil 11, mit welchem eine Umsteuerung möglich ist. Soll Kühlmittel ausschließlich umgepumpt werden, so gelangt Kühlmittel durch Leitung 10.1 zum kombinierten Rotor-Pumpen-Schaufelrad 4.1, wo es durch den Pumpenkanal 10.2 strömt. Schließlich gelangt es durch eine weitere Leitung 10.3 zu Motor 6.

Soll nur gebremst werden, so gelangt Kühlmittel in Leitung 12.1, und von dort aus durch einen Kanal 12.2 im Statorschaufelrad 4.2 in den Arbeitsraum des Retarders 4.

Der Arbeitsmittelstrom wird bei reinem Pumpenbetrieb somit nur durch den Pumpenteil des Rotors hindurchgeführt, bei Bremsbetrieb hingegen nur durch den Retarder.

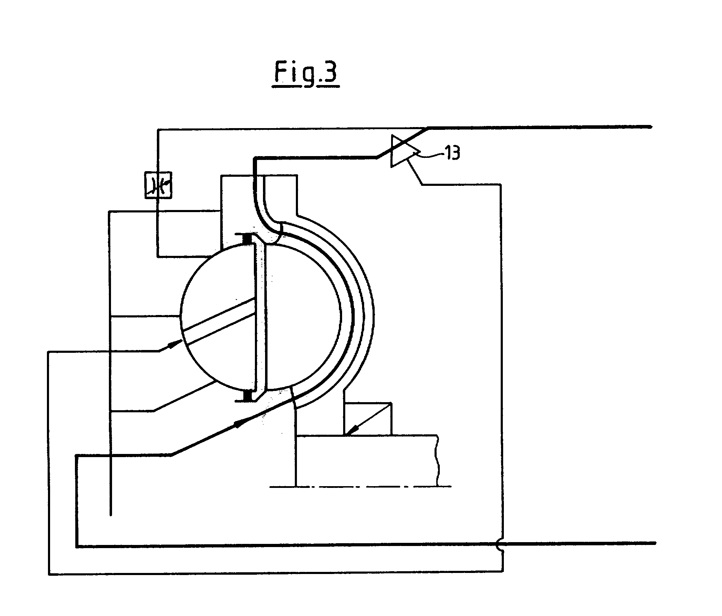

Die Ausführungsform gemäß Figur 3 zeigt eine besonders interessante Lösung. Hierbei kann nämlich bei Bremsbetrieb zuerst der Pumpenkanal durchströmt werden. Sodann kann der Arbeitsmittelstrom mittels eines weiteren Zwei/Zwei-Wegeventiles 13 zurückgeführt und in den Retarderteil eingeleitet werden. Dies hat den Vorteil, daß bei fehlendem Außendruck, d.h. bei äußerem Überlagerungsdruck, der Pumpenteil des kombinierten Rotor-Pumpen-Schaufelrades dazu verwendet wird, das Arbeitsmittel auf einen höheren Druck zu bringen, so daß eine stärkere Bremswirkung eintritt.

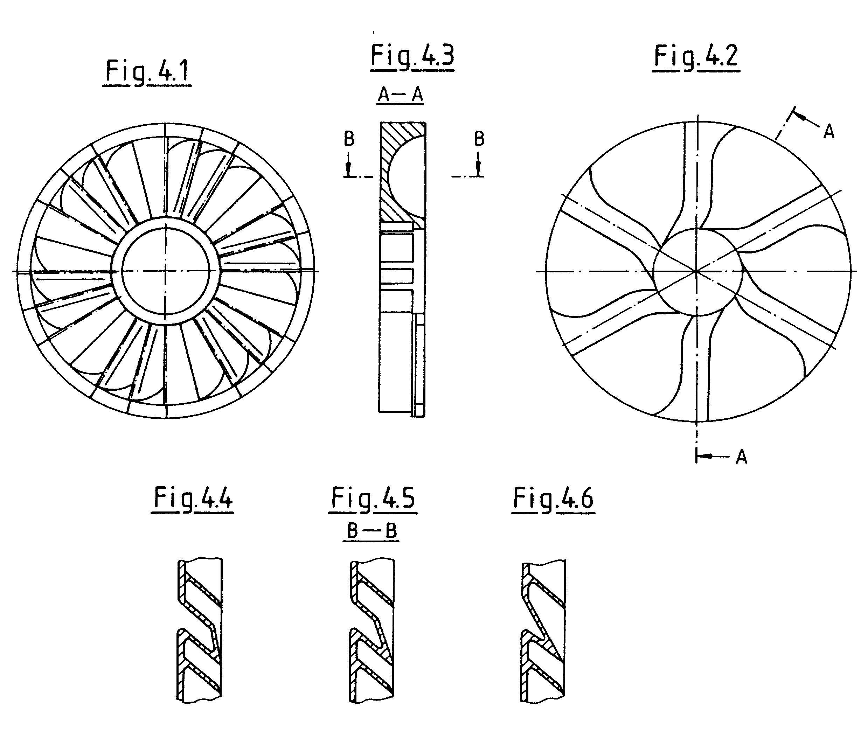

Figur 4 zeigt eine Ausführungsform, bei welcher das kombinierte Rotor-Pumpen-Schaufelrad praktisch aus einer einzigen Wandung hergestellt ist. Dabei zeigt Figur 4.1 die Ansicht auf das kombinierte Schaufelrad auf den Rotorschaufelteil, Figur 4.2 die Ansicht auf den Pumpenteil des konbinierten Schaufelrades.

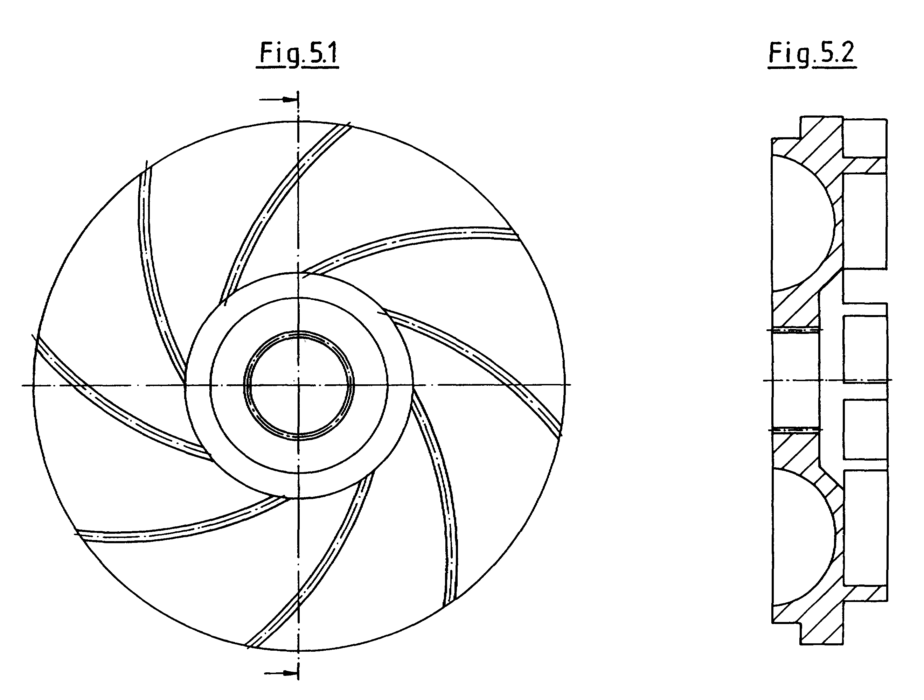

Die Figuren 5.1 und 5.2 veranschaulichen eine weitere Ausführungsform des kombinierten Schaufelrades. Dabei ist in Figur 5.1 der Pumpenteil dargestellt.

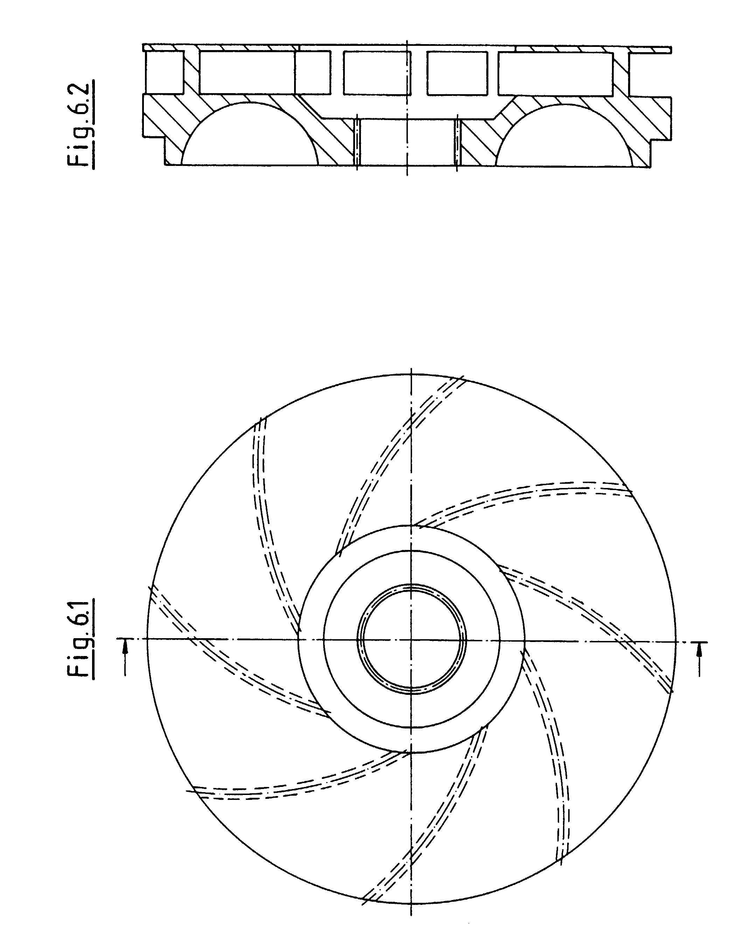

Die Figuren 6.1 und 6.2 sind entsprechende Ansichten einer weiteren Ausführungsform.

## Patentansprüche

1. Antriebseinheit mit den folgenden Merkmalen:
1.1 einem Motor und einem Getriebe;
1.2 einem hydrodynamischen Retarder:
1.3 der Retarder umfaßt ein Rotorschaufelrad, ein Statorschaufelrad und ein diese beiden einschließendes Retardergehäuse;
1.4 einen Kühlmittelkreislauf, dessen Kühlmittel zugleich Arbeitsmittel des Retarders ist;
1.5 zum Fördern des Kühlmittels ist ein Pumpenlaufrad vorgesehen, das koaxial zum Rotorschaufelrad des Retarders angeordnet ist.
1.6 das Rotorschaufelrad und das Pumpenlaufrad sind auf ein und derselben Welle angeordnet;
gekennzeichnet durch die folgenden Merkmale:
1.7 das Pumpenlaufrad ist innerhalb des Retardergehäuses angeordnet.

2. Antriebseinheit nach Anspruch 1, dadurch gekennzeichnet, daß das Statorschaufelrad zwischen Rotorschaufelrad und Pumpenlaufrad angeordnet ist.

3. Antriebseinheit nach einem der Ansprüche 1 oder 2, dadurch gekennzeichnet, daß das Rotorschaufelrad und das Pumpenlaufrad baulich miteinander vereinigt sind.

4. Antriebseinheit nach Anspruch 3, dadurch gekennzeichnet, daß die Pumpenschaufeln an der Rückseite des Rotorschaufelrades angeordnet sind.

5. Antriebseinheit nach Anspruch 3 oder 4, dadurch gekennzeichnet, daß die Rotorschaufeln und die Pumpenschaufeln aus einer einzigen Wandung gebildet sind.

## Claims

1. Drive unit with the following features:
1.1 an engine and a gear;
1.2 a hydrodynamic retarder;
1.3 the retarder comprises a rotor blade wheel and a stator blade wheel and a retarder housing enclosing both of these;
1.4 a coolant circuit, the coolant of which at the same time being the operating medium of the retarder;
1.5 a pump blade wheel arranged coaxially to the rotor blade wheel of the retarder is provided to transport the coolant;
1.6 the rotor blade wheel and the pump blade wheel are arranged on the same shaft;
characterised by the following features:
1.7 the pump blade wheel is arranged inside the retarder housing.

2. Drive unit according to Claim 1, characterised in that the stator blade wheel is arranged between the rotor blade wheel and the pump blade wheel.

3. Drive unit according to one of Claims 1 or 2, characterised in that the rotor blade wheel and the pump blade wheel are joined together structurally.

4. Drive unit according to Claim 3, characterised in that the pump blades are arranged on the rear side of the rotor blade wheel.

5. Drive unit according to Claim 3 or 4, characterised in that the rotor blades and the pump blades are formed from a single wall.

## Revendications

1. Unité d'entraînement présentant les caractéristiques suivantes:
1.1 un moteur et une transmission;
1.2 un ralentisseur hydrodynamique;
1.3 le ralentisseur comporte une roue à aubages, appelée roue-rotor, une roue à aubages, appelée roue-stator, et un carter de ralentisseurr entourant ces deux roues;
1.4 un circuit de fluide réfrigérant, dont le fluide réfrigérant est en même temps le fluide de travail du ralentisseur;
1.5 une roue-pompe est prévue pour la circulation du fluide refrigérant, laquelle est placée coaxialement par rapport à la roue-rotor du ralentisseur;
1.6 la roue-rotor et la roue-pompe sont placées sur un seul et même arbre caractérisée par les caractéristiques suivantes:
1.7 La roue-pompe est disposée à l'intérieur du carter du ralentisseur.

2. Unité d'entraînement selon la revendication 1, caractérisée en ce que la roue-stator est disposée entre la roue-rotor et la roue-pompe.

3. Unité d'entraînement selon l'une des revendicatons 1 ou 2, caractérisée en ce que la roue-rotor et la roue-pompe sont constructivement unies entres-elles.

4. Unité d'entraînement selon la revendication 3, caractérisée en ce que les aubages de la pompe sont disposés à l'arrière de la roue-rotor.

5. Unité d'entraînement selon la revendication 3 ou 4, caractérisée en ce que les aubages du rotor et les aubages de la pompe sont formés par une seule paroi.
